# EUROPEAN PATENT APPLICATION

(11) **EP 4 851 662 A1**
(43) Date of publication of application: **09.12.2026**
(21) Application number: 24941600.9
(22) Date of filing: 26.12.2024
(51) Int. Cl.: G01S 7/41

(54) **SIGNAL PROCESSING METHOD AND APPARATUS, RADAR, CIRCUIT, SENSOR, TERMINAL, AND MEDIUM**

(30) Priority: 29.05.2024 CN 202410686835
(71) Applicant: Calterah Semiconductor Technology (Shanghai) Co., Ltd, Shanghai 201210 (CN)
(72) Inventor: CHEN, Yi, Shanghai 201210 (CN); MA, Yi, Shanghai 201210 (CN); YU, Zengyu, Shanghai 201210 (CN)
(74) Representative: WSL Patentanwälte Partnerschaft mbB
(86) International application number: PCT/CN2024/142838
(87) International publication number: WO 2025/246335

(57) **Abstract**

A signal processing method and apparatus, a radar, a circuit, a sensor, a terminal, and a medium. The signal processing method comprises: on the basis of an initial count of targets in the direction of arrival of an echo signal, estimating position information and amplitude of each target under a current target count; calculating a current energy residual on the basis of the position information and amplitude of the target; and if the energy residual is greater than a preset threshold, increasing the current target count, re-estimating the position information and amplitude of each target under the current target count until the current energy residual is smaller than the preset threshold, wherein in estimating the position information and amplitude of the target, the position information and amplitude of the target are obtained by performing FFT processing and Chirp Z transformation processing on a target signal.

## Description

The present application claims priority of Chinese Patent Application No. 202410686835.0, filed on May 29, 2024, entitled "Signal Processing Method and Apparatus, Radar, Terminal, and Medium", the contents of which should be construed as being incorporated into this application by reference.

### Technical field

The present disclosure relates, but is not limited, to the field of radar technology, and in particular relates to a signal processing method, apparatus, radar, circuit, sensor, terminal and medium.

### Background

With the development of 4D cascaded imaging radar technology, higher requirements are put forward for angle precision and angle resolution of a millimeter wave radar. In order to obtain a point cloud of contour of a target, the DOA (Direction Of Arrival) positioning needs to realize a higher angle resolution and a larger number of resolvable angles. At the same time, the DOA algorithm should have good real-time performance since a 4D imaging radar has a relatively large number of point clouds. Determination of a direction of arrival of a signal depends on the number of signal sources, and if data about the signal sources is incorrectly estimated, the accuracy of angle resolution will be affected.

### Summary

The following is a summary of subject matter described in detail herein. This summary is not intended to limit the scope of protection of the claims.

In one aspect, an embodiment of the present disclosure provides a signal processing method, including:
estimating position information and amplitude of each target under a current target number based on an initial target number in a direction of arrival of an echo signal; calculating current energy residual based on position information and amplitude of targets; and if the energy residual is greater than a preset threshold, increasing the current target number and re-estimating position information and amplitude of each target under the current target number until current energy residual is less than the preset threshold, wherein when position information and amplitude of a target are estimated, the position information and amplitude of the target are obtained by performing Fast Fourier Transform (FFT) processing and Chirp Z transform processing on a signal of the target.

In another aspect, an embodiment of the present disclosure further provides a signal processing apparatus including a processor and a memory storing a computer program executable on the processor, wherein the program, when executed by the processor, implements acts of the signal processing method as described above.

In still another aspect, an embodiment of the present disclosure further provides a radar, which includes a transceiver and a processor, and the transceiver includes at least one antenna, wherein the transceiver is configured to transmit a detection signal, and to receive an echo signal after the detection signal is reflected by a target; and the processor is configured to implement the signal processing method as described above.

In yet another aspect, an embodiment of the present disclosure further provides an integrated circuit including a signal transceiver and a processor, wherein the signal transceiver is configured to transmit a detection signal and to receive an echo signal after the detection signal is reflected by a target; and the processor is configured to implement the aforementioned signal processing method to process the echo signal and achieve target detection.

In yet another aspect, an embodiment of the present disclosure further provides an electromagnetic wave sensor, including: a carrier body, an integrated circuit as described above, and an antenna, wherein the integrated circuit is provided on the carrier body; the antenna is provided on the carrier body, or the antenna and the integrated circuit are integrated into an integral device which is provided on the carrier body; and wherein the integrated circuit is connected with the antenna to transmit an electromagnetic wave signal and/or receive an echo signal.

In yet another aspect, an embodiment of the present disclosure further provides a terminal, which includes the radar or the integrated circuit or the electromagnetic wave sensor as described above.

In yet another aspect, an embodiment of the present disclosure further provides a computer-readable storage medium with computer-executable instructions stored therein, and the computer-executable instructions are used to implement the signal processing method as described above.

After the drawings and detailed description are read and understood, other aspects can be understood.

### Brief Description of Drawings

Accompanying drawings are used for providing an understanding of technical solutions of the present application and form a part of the specification, are used for explaining the technical solutions of the present application together with embodiments of the present application, and do not constitute a limitation on the technical solutions of the present application.
FIG. 1 is a flow chart of an embodiment of the present disclosure.
FIG. 2 is a flow chart of signal processing according to an embodiment of the present disclosure.
FIG. 3 is a schematic diagram of a ULA signal.
FIG. 4 is a flow chart of Chirp Z transform.
FIG. 5A is a diagram showing an FFT result of an original signal x0.
FIG. 5B is a diagram showing a CZT result of the original signal x0.
FIG. 6A is a diagram showing a result of resolution of signal source number by using a DBF approach.
FIG. 6B is a diagram showing a result of resolution of signal source number by using a DML approach.
FIG. 6C is a diagram showing a result of resolution of signal source number by using a Relax approach according to an embodiment of the present disclosure.
FIG. 7 is a diagram showing comparison between RMSEs (Root Mean Square Errors) of different algorithms.
FIG. 8 is a schematic diagram of a signal processing apparatus according to an embodiment of the present disclosure.
FIG. 9 is a schematic diagram of a radar according to an embodiment of the present disclosure.
FIG. 10 is a schematic diagram of an integrated circuit according to an embodiment of the present disclosure.
FIG. 11 is a schematic diagram of an electromagnetic wave sensor according to an embodiment of the present disclosure.
FIG. 12 is a schematic diagram of a terminal device according to an embodiment of the present disclosure.

### Detailed Description

Multiple embodiments are described in the present application. However, the description is exemplary and unrestrictive. Moreover, it is apparent to a person of ordinary skill in the art that there may be more embodiments and implementation solutions within the scope of the embodiments described in the present application. Although many possible feature combinations are shown in the drawings and discussed in the detailed description, many other combinations of disclosed features are possible. Unless expressly limited, any feature or element of any embodiment may be used in combination with, or may replace, any other feature or element in any other embodiment.

In the present application, combinations of features and elements known to a person of ordinary skill in the art are included and contemplated. The disclosed embodiments, features and elements of the present application may also be combined with any conventional features or elements to form unique inventive solutions. Any features or elements of any embodiments may also be combined with features or elements from other inventive solutions to form yet another unique inventive solution. Accordingly, it should be understood that any of the features shown and/or discussed in the present application may be implemented alone or in any suitable combination. Thus, the embodiments are not subject to limitations other than those made in accordance with appended claims and their equivalents thereof. In addition, various modifications and changes can be made within the protection scope of the appended claims.

Further, when representative embodiments are described, a method and/or process may have been presented as acts in a particular sequence in the specification. However, to an extent that the method or process does not depend on the particular sequence of the acts herein, the method or process should not be limited to the acts in the particular sequence. A person of ordinary skill in the art will understand that other sequences of acts may also be possible. Therefore, the particular sequence of the acts illustrated in the specification should not be interpreted as a limitation on claims. In addition, the claims directed to the method and/or process should not be limited to performing the acts according to the sequence described. Those skilled in the art can easily understand that these sequences may be changed, and are still maintained in the essence and scope of the embodiments of the present application.

In the field of radar, a radar sends a detection signal to a target, the target reflects an echo signal to the radar, and the radar processes the echo signal reflected by the target to determine a distance, speed and angle of the target, thereby realizing positioning of the target. Here, the radar may also be called a radar transceiver. This positioning can be applied to fields such as autonomous driving, security, drones, and so on. For example, after receiving the echo signal, the radar first performs analog-to-digital conversion (AD) on the echo signal, and then samples the obtained digital signal, so as to sequentially perform one-dimensional Fast Fourier Transform (1D-FFT) and two-dimensional Fast Fourier Transform (2D-FFT) on the sampled digital signal to accumulate the echo signal and obtain a Doppler frequency of the target. After that, the radar performs constant false alarm rate (CFAR) detection to distinguish between the echo signal and noise to determine whether a target signal exists, and obtain targets with the same distance and speed. Then, the targets with the same distance and speed are processed to obtain the number of target objects, that is, the number of signal sources, for facilitating subsequent calculation of a direction of arrival (or an incoming wave direction, that is, an angle of the target).

In the existing 4D imaging DOA, a traditional DBF (Digital Beamforming) approach is easy to implement and can achieve resolution of multiple targets in a single snapshot, but has a low resolution and a relatively narrow dynamic range of resolution due to higher levels of side lobes. A Capon (Minimum Variance Distortionless Response, MVDR)/MUSIC (Multiple Signal Classification) algorithm can achieve a higher resolution and a better dynamic range, but its performance loss in a single snapshot is relatively large, and the number of 4D imaging channels is relatively large, which results in poor real-time performance due to matrix inversion and eigenvalue decomposition. An ESPRIT (Estimation of Signal Parameters via Rotational Invariance Techniques) algorithm can achieve a higher resolution and a better dynamic range by spatial smoothing, but it requires a Uniform Linear Array (ULA) for the arrangement of the antenna, and therefore has more constraints on the antenna design. A DML (Deterministic Maximum Likelihood) algorithm can achieve a higher resolution and a better dynamic range, and can be applied in a single snapshot. However, its computation amount increases exponentially when the number of signal sources is greater than 2, resulting in a poor real-time performance.

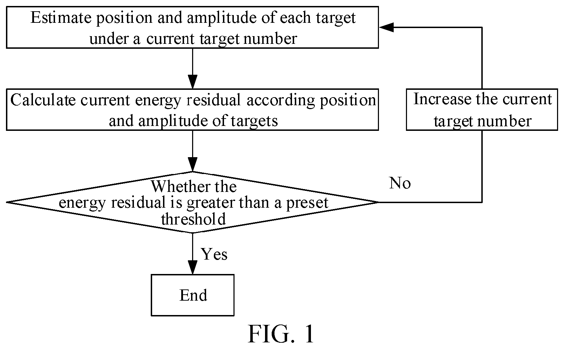

For the above reasons, an embodiment of the present disclosure provides a signal processing method, as shown in FIG. 1. The method includes: estimating position information and amplitude of each target under a current target number based on an initial target number in a direction of arrival of an echo signal; calculating current energy residual based on the position information and amplitude of the target; if the energy residual is greater than a preset threshold, increasing the current target number and re-estimating position information and amplitude of each target under a current target number until a current energy residual is less than the preset threshold, wherein when estimating position information and amplitude of a target, the position information and amplitude of the target are obtained by performing an FFT processing and a Chirp Z transform processing on a signal of the target.

The embodiment of the present disclosure estimates the position information and amplitude of the target through energy residual to reduce computation amount. In addition, an FFT processing combined with a Chirp Z transform processing can achieve refinement of the spectrum and improve estimation accuracy for the target position and amplitude, thus having better robustness. In summary, the signal processing method of the embodiment of the present disclosure can improve performance of signal processing.

The above-mentioned position information includes: an angle or a range frequency or a Doppler frequency.

In an exemplary embodiment, before estimating the position information of each target under the current target number, the method further includes: obtaining the echo signal in a form of a Uniform Linear Array (ULA) by padding zeros to data-free positions. By processing the echo signal into the form of the ULA, a subsequent signal after FFT processing may have low side lobes, and a convergence speed and accuracy of subsequent calculation can be improved.

In an exemplary embodiment, the increasing the current target number and re-estimating the position information and amplitude of each target under the current target number includes: increasing the current target number by 1, calculating a residual signal in the echo signal as a signal of a newly added target by using the position information and amplitude of each target obtained at a previous estimation, and obtaining position information and amplitude of the newly added target by performing FFT processing and Chirp Z transform processing on the signal of the newly added target. The angle and amplitude of each target are estimated by gradually increasing the target number, which can reduce calculation complexity and improve estimation accuracy of the position information.

In an exemplary embodiment, after obtaining the position information and amplitude of the newly added target by performing FFT processing and Chirp Z transform processing on the residual signal, the method further includes: repeatedly performing the following act until the position information of the target converges: for each target, on a premise that the position information and amplitudes of other targets are fixed, calculating the residual signal in the echo signal as a signal of a current target based on the position information and amplitudes of the other targets, and performing FFT processing and Chirp Z transform processing on the signal of the current target to obtain new position information and amplitude of the current target. The position information and amplitude of each target are calculated by using the above-mentioned iterative optimization way, which can eliminate mutual influence between the targets, achieve effective separation between the targets, and reduce the calculation amount and complexity compared with a solution of calculating all targets simultaneously. The calculation process of the above embodiment uses a relaxation algorithm (Relax), which resolves multiple targets using repeated iterative calculation and can achieve good performance in signal processing.

For example, when the preset target number is 1, obtaining the position information and amplitude of the target by performing FFT processing and Chirp Z transform processing on the signal of the target includes:
performing FFT processing on the signal of the target to obtain a first frequency corresponding to the largest energy in a spectrum;
setting a first frequency range (for example, the first frequency ± 1/L, where L is the number of discrete data points of the FFT processing) according to the first frequency, performing Chirp Z transform processing on the signal of the target according to the first frequency range, and obtaining a second frequency corresponding to the largest energy in a spectrum and a corresponding amplitude, wherein the amplitude is used as an amplitude of the current target; and
obtaining the position information of the signal of the target based on the second frequency and the amplitude.

For another example, when the preset target number is 2, obtaining the position information and amplitude of the target by performing FFT processing and Chirp Z transform processing on the signal of the target includes:
using the position information and amplitude calculated when the preset target number is 1 as position information and amplitude of a first target, and calculating a residual signal in the echo signal as a signal of a second target by using the position information and amplitude of the first target, and performing FFT processing on the signal of the second target to obtain a third frequency corresponding to the largest energy in a spectrum;
setting a second frequency range (for example, the third frequency ± 1/L) according to the third frequency, performing Chirp Z transform processing on the signal of the target according to the second frequency range, and obtaining a fourth frequency corresponding to the largest energy in a spectrum and a corresponding amplitude, wherein the amplitude is used as an amplitude of the second target; and
obtaining position information of the second target based on the fourth frequency and the amplitude.

In an exemplary embodiment, after increasing the current target number, the method may further include: terminating a current signal processing procedure if the current target number reaches a preset maximum target number.

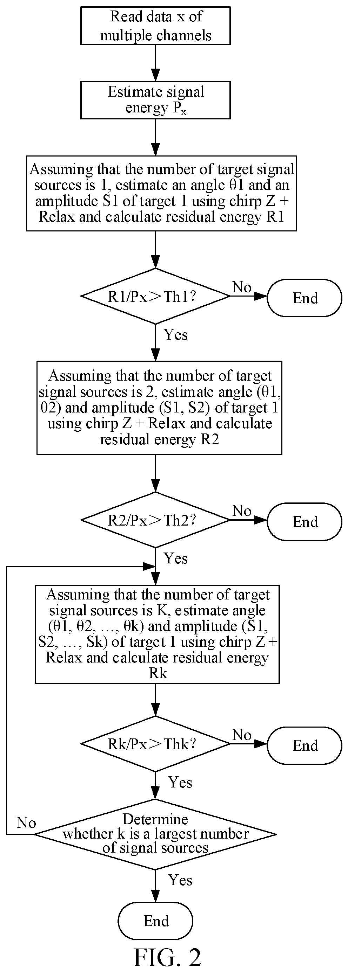

The method of estimating signal source number provided in the present embodiment will be described in detail below, with the flowchart shown in FIG. 2.

Act 1, signal sampling is performed. In the act 1, assuming that K far-field signals are incident on an antenna with M array elements, and a set of incident angles of the K signals is ϑ = {θ₁, θ₂, ... , θ_{K}}, then a signal received by the array may be written as: $x = {\sum }_{i = 1}^{K} {s}_{i} A \left({θ}_{i}\right) + n$ where x represents a vector of a signal, sᵢ represents a signal vector of an i-th signal source, A(θᵢ) represents a steering vector of the i-th signal source, and n represents noise. The vector of a signal refers to a representation of the signal received by the radar in the complex field, including amplitude information and phase information of the signal. The signal vector of a signal source refers to a vector form into which the signal data collected from the signal source is organized according to a certain rule. The steering vector of a signal source is used to describe a steering property of a signal in a specific direction or angle. The steering vector is usually used to indicate an incident angle or a radiation direction of a signal.

Act 2, energy of the signal is calculated by using Px = x^{H}x, wherein x^{H} represents the conjugate transpose of x.

Act 3, assuming that the target number is 1, an amplitude ${s}_{1}^{\left(1\right)}$ and an angle ${θ}_{1}^{\left(1\right)}$ of the target are estimated, and energy residual is calculated, wherein the subscript denotes a target serial number and the superscript is the assumed total target number.

Here, the act 3 includes the following acts 3.1 and 3.2.

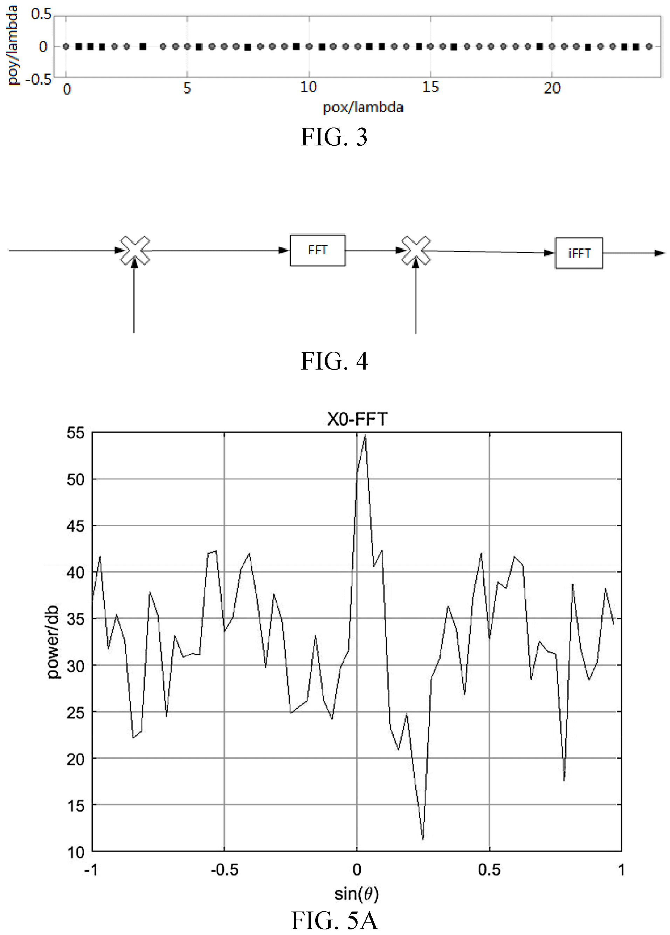

Act 3.1, zero padding is performed on the signal x (padding zeros to data-free positions) to obtain a signal x in a form of ULA, as shown in FIG. 3, wherein a position at a circle represents a virtual channel formed by the MIMO array, and a position at a square represents a supplementary unit which is used for supplementing the array into an equally spaced array. The signal in the form of ULA obtained by performing zero padding can achieve low side lobes in the subsequent signal after FFT processing, and can improve the convergence speed and accuracy of subsequent calculations.

Act 3.2, coarse sampling (or coarse searching) is performed on the zero-padded signal, and in the present embodiment the coarse sampling is performed by FFT processing, wherein the number of points of FFT is set as L, and a frequency f₁ corresponding to the largest energy in the FFT spectrum ${X}_{0}^{fft}$ is obtained.

Since the target number is set to 1 in act 3, only the frequency corresponding to the largest energy needs to be obtained. Through FFT processing, the frequency corresponding to the largest energy of the FFT spectrum is obtained, and a range of coarse search, that is, a first frequency range $\left[{f}_{1}-\frac{1}{L},{f}_{1}+\frac{1}{L}\right]$ may be determined.

The number of points of FFT refers to the number of discrete data points contained in an input signal when FFT processing is performed, and the number of points of FFT determines a spectral resolution and accuracy of an FFT output. While FFT analysis is performed, the input signal is divided into L discrete data points, where L is a positive integer, and common values of L can be 8, 16, 32, 64, 128, 256, etc. The selection of different numbers of the points can affect the calculation speed and spectral resolution of the FFT. A larger number of points can provide a higher spectral resolution, but also requires more calculation resource.

Act 3.3, fine sampling (or fine search) is performed on the coarsely sampled signal, that is, within the first frequency range $\left[{f}_{1}-\frac{1}{L},{f}_{1}+\frac{1}{L}\right]$, Chirp Z transform is performed on x to obtain a fine spectrum ${X}_{1}^{czt}$, where L is used to determine a range of the fine sampling and 1/L represents a frequency after FFT-transform.

The Chirp Z transform (CZT) transforms time sequence signals into signals with a time-frequency representation to capture time-varying frequency characteristics of the signals. A Chirp Z transform approach includes: generating a Chirp signal, determining a sampling frequency and selecting the number of discrete data points for Chirp Z transform; and sampling the Chirp signal in a time domain to obtain a discrete time sequence, multiplying the sequence sampled in the time domain with a Chirp multiplication function to increase the frequency resolution, Performing FFT calculation on the signal multiplied by the multiplication function to obtain a spectrum after Chirp Z transform. To implement Chirp Z transform efficiently, during calculation of Chirp Z transform, FFT and IFFT algorithms may be used to speed up the conversion and inverse conversion of the signal in the frequency domain. As shown in FIG. 4, the signal is processed using FFT to obtain a representation of the signal in the frequency domain, and then the calculated data in the frequency domain is converted back to the time domain through IFFT. The property of high efficiency of FFT and IFFT can reduce the calculation complexity and improve the computation speed when Chirp Z transform is calculated.

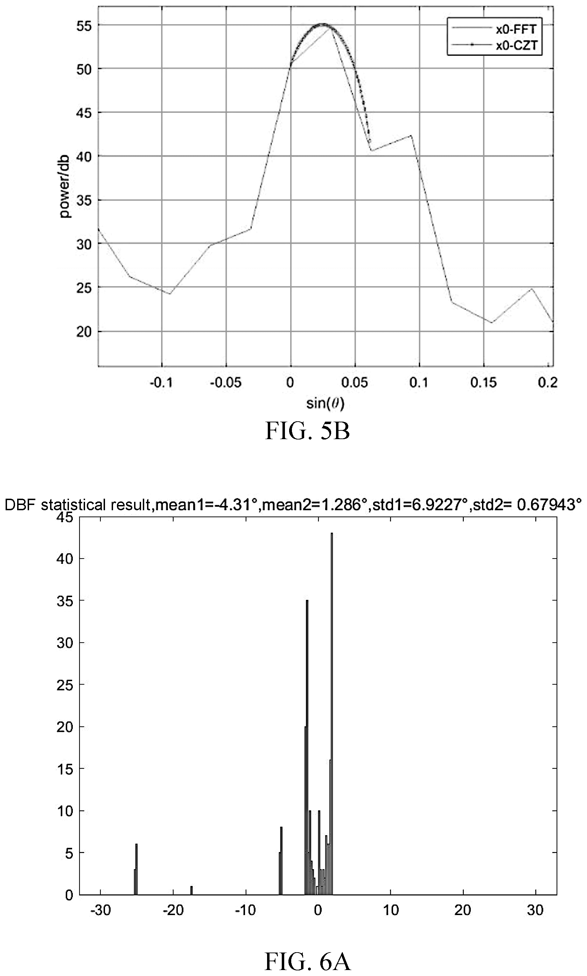

FIG. 5A is a schematic diagram of a result of a coarse search by using FFT processing and FIG. 5B is a diagram of comparison between a result of a fine search through Chirp Z transform processing and the result of the coarse search, wherein in FIG. 5B, the solid line is the result of FFT, and the solid line with dot markers is the result of Chirp Z transform. It can be seen that the result of Chirp Z transform is finer and smoother.

Act 3.4, according to the fine spectrum ${X}_{1}^{czt}$, a frequency ${f}_{1}^{czt}$ with the largest energy in the fine spectrum ${X}_{1}^{czt}$ (that is, a frequency corresponding to an energy maximum in the spectrum) and a corresponding amplitude ${s}_{1}^{\left(1\right)}$ of the signal may be obtained, and target angle estimation ${θ}_{1}^{\left(1\right)} , { P}_{1}^{\left(1\right)}$ and an energy residual, i.e., residual energy R₁ are calculated according to the following formulas, wherein: ${θ}_{1}^{\left(1\right)} = asin \left(2{f}_{1}^{czt}\right)$ ${P}_{1}^{\left(1\right)} = {\left‖{s}_{1}^{\left(1\right)}\right‖}^{2}$ ${R}_{1} = \left(x-{s}_{1}^{\left(1\right)}A{\left({θ}_{1}^{\left(1\right)}\right)}^{H}\left(x-{s}_{1}^{\left(1\right)}A\left({θ}_{1}^{\left(1\right)}\right)\right.\right.$

Act 3.5, it is determined whether the residual R₁ is greater than a preset first threshold Th1, if so, it is considered there are still targets in the residual energy, and resolution of more targets is performed by increasing the target number by 1, and act 4 will be performed, and otherwise, the signal processing procedure is terminated.

For example, the first threshold Th1 may be determined according to a ratio of the current energy to the total energy, for example, according to a ratio of the energy ${P}_{1}^{\left(1\right)}$ calculated in act 3.4 to the total energy of signal Pₓ in act 2. The ratio R1/Pₓ may be used for comparison with the threshold Th1.

Act 4, assuming that the target number is 2, amplitudes ${s}_{1}^{\left(2\right)} , { s}_{2}^{\left(2\right)}$ and angles ${θ}_{1}^{\left(2\right)} , {θ}_{2}^{\left(2\right)}$ of the targets are estimated and energy residual is calculated, where the subscript denotes a target serial number, and the superscript is the assumed current total target number and also represents the number of iterations (the second iteration in this act).

The act 4 includes the following acts 4.1 to 4.7.

Act 4.1, an angle of target 1 is initialized to be the result ${θ}_{1}^{\left(2\right)} = {θ}_{1}^{\left(1\right)}$ of act 3.

Act 4.2, a residual signal ${x}_{2}^{\left(2\right)} = x - {s}_{1}^{\left(2\right)} A \left({θ}_{1}^{\left(1\right)}\right)$ is calculated based on an amplitude and angle of the current target, wherein the residual signal refers to the remaining portion when the signal of the target 1 is removed from the currently received signal.

Act 4.3, FFT processing and Chirp Z transform (with the processing as in acts 3.2-3.4) are performed on the signal ${x}_{2}^{\left(2\right)}$ to obtain an initial estimation ${θ}_{2}^{\left(2\right)}$ and amplitude ${s}_{2}^{\left(2\right)}$ of the target 2.

Since the angle and amplitude of the target 1 have been estimated in act 3, this act only needs to obtain the angle and amplitude of the target 2 through FFT processing and Chirp Z transform processing.

Act 4.4, the angle and amplitude of the target 1 are re-estimated by using the angle and amplitude of the target 2 estimated in act 4.3: the signal ${x}_{1}^{\left(2\right)} = x - {s}_{2}^{\left(2\right)} A \left({θ}_{2}^{\left(2\right)}\right)$ of the target 1 is calculated, and FFT processing and Chirp Z transform are performed on the signal ${x}_{1}^{\left(2\right)}$ (with the processing process as in acts 3.2-3.4) to obtain the estimation ${θ}_{1}^{\left(2\right)}$ and amplitude ${s}_{1}^{\left(2\right)}$ of the target 1.

Act 4.5, acts 4.2 to 4.4 are iteratively repeated until the result converges, that is, the angles of the target 1 and the target 2 do not change any more, thus obtaining ${θ}_{1}^{\left(2\right)} , {θ}_{2}^{\left(2\right)}$.

By calculating the angle and amplitude of only one target at a time, and the final angle and amplitude of each target are calculated in an iterative way, the calculation complexity and amount are reduced.

Act 4.6, residual energy, i.e., energy residual R₂ is calculated. ${R}_{2} = {\left(x-{\sum }_{i = 1}^{2} {s}_{i}^{\left(2\right)} A \left({θ}_{i}^{\left(2\right)}\right)\right)}^{H} \left(x-{\sum }_{i = 1}^{2} {s}_{i}^{\left(2\right)} A \left({θ}_{i}^{\left(2\right)}\right)\right)$

Act 4.7, it is determined whether the residual energy R₂ is greater than a preset second threshold Th2, if so, it is considered that there are still targets in the residual energy, and resolution of more targets is performed, the target number is increased by 1 and act 5 is performed, and otherwise, the signal processing procedure is terminated.

Act 5, assuming that the target number is K, the amplitude $\left\{{s}_{1}^{\left(K\right)},{s}_{2}^{\left(K\right)},…,{s}_{K}^{\left(K\right)}\right\}$ and angle $\left\{{θ}_{1}^{\left(K\right)},{θ}_{2}^{\left(K\right)},…,{θ}_{K}^{\left(K\right)}\right\}$ of the targets are estimated, and the energy residual is calculated.

The act 5 includes the following acts 5.1 to 5.6.

Act 5.1, ${θ}_{i}^{\left(K\right)}$ is initialized as ${θ}_{i}^{\left(K-1\right)}$, that is, ${θ}_{i}^{\left(K\right)} = {θ}_{i}^{\left(K-1\right)}$, i = 1,2, ..., K - 1 based on an estimation result in a previous act, and a residual signal is calculated according to the following formula: ${x}_{K}^{\left(K\right)} = x - {\sum }_{i = 1}^{K - 1} {s}_{i}^{\left(K\right)} A \left.\left({θ}_{i}^{\left(K\right)}\right)\right)$

Act 5.2, FFT processing and Chirp Z transform are performed on the signal ${x}_{K}^{\left(K\right)}$ to obtain an initial estimation ${θ}_{K}^{\left(K\right)}$ and amplitude ${s}_{K}^{\left(K\right)}$ of the target K.

Act 5.3, the signal ${x}_{m}^{\left(K\right)} = x - {\sum }_{i = 1 , i \neq m}^{K} {s}_{i}^{\left(K\right)} A \left.\left({θ}_{i}^{\left(K\right)}\right)\right)$ of the m-th target is obtained in sequence, and FFT processing and Chirp Z transform are performed on the obtained signal to obtain the estimation ${θ}_{m}^{\left(2\right)}$ and amplitude ${s}_{m}^{\left(2\right)}$ of the m-th target.

Taking three targets as an example, since the angles and amplitudes of the two targets in act 4 have been obtained, the residual signal obtained according to the formula in act 5.1 by subtracting the signals of the first target and the second target from the echo signal is used as a signal of a third target. An angle and amplitude of the third target are obtained by performing FFT processing and Chirp Z transform processing on the signal of the third target, then the angle and amplitude of the first target are recalculated by using the angle and amplitude of the third target and the angle and amplitude of the second target, and then the angle and amplitude of the second target are recalculated by using the angle and amplitude of the first target and the angle and amplitude of the third target. Through multiple iterations, when the angles of the three targets do not change any more, or a change amount is less than a preset value, it is considered that convergence occurs.

Act 5.4, act 5.3 is iteratively repeated until convergence occurs.

Act 5.5, the residual energy R_{K} is calculated by: ${R}_{K} = {\left(x-{\sum }_{i = 1}^{K} {s}_{i}^{\left(K\right)} A \left({θ}_{i}^{\left(K\right)}\right)\right)}^{H} \left(x-{\sum }_{i = 1}^{K} {s}_{i}^{\left(K\right)} A \left({θ}_{i}^{\left(K\right)}\right)\right)$

Act 5.6, it is determined whether the residual R_{K} is greater than a preset threshold ThK, if so, it is considered that there are still targets in the residual energy, and the target number is increased by 1 to continue resolution of more targets, and otherwise, the signal processing procedure is terminated.

Act 6, a largest target resolution number Kₘₐₓ is preset, and the procedure is terminated when K reaches the maximum Kₘₐₓ.

For example, in the above act 3.5, act 4.7 and act 5.6, after the target number is increased by 1, it is determined whether the current target number K reaches Kₘₐₓ, if so, the procedure is terminated, and if not, subsequent acts are performed.

Embodiments of the present disclosure use Relax (relaxation algorithm) to perform resolution of multiple targets, which eliminates mutual influence between targets through iterative optimization, and achieves effective separation between targets, thereby realizing resolution of targets. In addition, if there is a deviation in estimation of the amplitude and angle of the target (that is, grid points of the angle are relatively sparse), there will be relatively large performance loss. Therefore, Chirp Z transform is used to realize refinement of the spectrum, which can realize more robust resolution of multiple (> 2) targets in a single snapshot, and can reduce the computational complexity by using the characteristics of Chirp Z transform, thereby can ensure the requirement of real-time processing, thus achieving better robustness while achieving accurate estimations of the amplitude and angle of the target. The number of target signal sources is finally estimated through residual energy estimation.

Assuming that the angles of two targets are [-1.5 °, 1.5 °] respectively, and the SNRs (Signal-to-Noise Ratio) of the two targets are [10dB, 10dB] respectively, 100 experiments are performed, wherein numbers of the steering vectors using the DBF approach and using the DML approach are both 512. And for the Relax algorithm of this example, the FFT size is 64, and the number of points of by Chirp Z transform is 64.

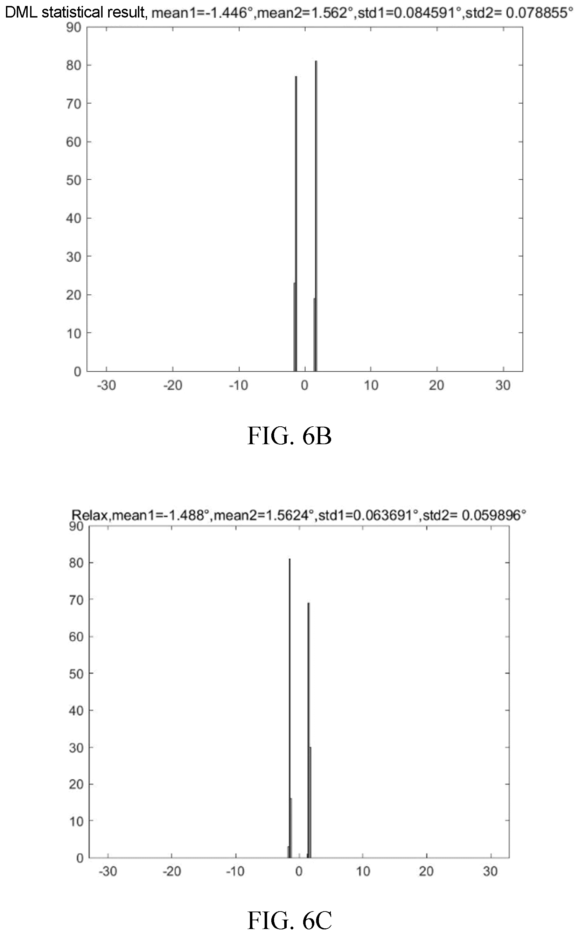

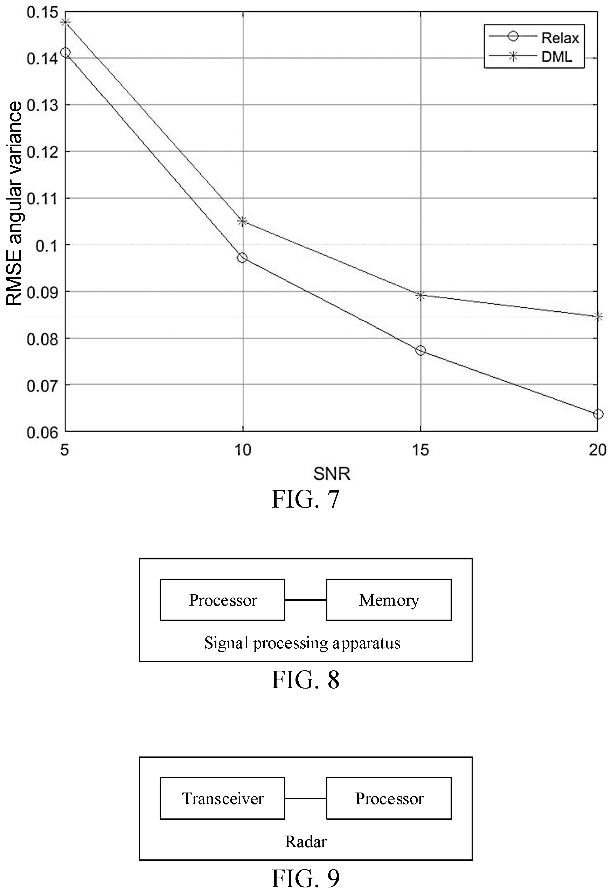

FIG. 6A is a diagram of a statistical result of resolution signal source number by using a DBF approach, FIG. 6B is a diagram of a statistical result of resolution of signal source number by using a DML approach, and FIG. 6C is a diagram of a statistical result of resolution of signal source number by using the Relax approach according to the embodiment of the present disclosure. It can be seen from FIG. 6A to FIG. 6C that in a scenario where a high resolution is required, the DBF approach may not be able to resolve targets, but the Relax algorithm and the DML algorithm both can achieve accurate resolution of the targets. The RMSEs measured when SNRs of the two targets are set to [5, 10, 15, 20] dB respectively are shown in FIG. 7. It can be seen that the measured RMSEs of the Relax algorithm are lower than those of the DML algorithm, so the performance of the Relax algorithm is better than that of the DML algorithm.

Comparison of the computation cost of the algorithm (taking a case in which the Relax algorithm has 10 iterations as an example) is shown in Table 1.

**Table 1 Comparison of computation amount**

| Algorithm Type | Computation amount (number of multiplications and additions) |
|---|---|
| DBF | 4608 |
| Relax | 15360 |
| DML | 131072 |

It can be seen that the computation amount of the Relax algorithm is moderate, and the performance of the Relax algorithm is the best among the three algorithms.

The embodiment of the present disclosure may be used not only for estimation of the DOA, but also for estimation of the range frequency and Doppler frequency (used to calculate velocity), wherein the method acts are the same as in the previous embodiments, except that when the signal is sampled in act 1, the signal is not sampled in the antenna dimension, but is sampled within a pulse if the range frequency estimation is performed, or is sampled between pulses if the Doppler frequency estimation is performed.

An embodiment of the present disclosure further provides a signal processing apparatus, which, as shown in FIG. 8, includes a processor and a memory storing a computer program executable on the processor, wherein the program, when executed by the processor, can implement the aforementioned signal processing method.

An embodiment of the present disclosure further provides a radar, which, as shown in FIG. 9, includes a transceiver and a processor, and the transceiver includes at least one antenna, wherein, the transceiver is configured to transmit a detection signal and to receive an echo signal of the detection signal reflected by a target; and the processor is configured to implement the aforementioned signal processing method.

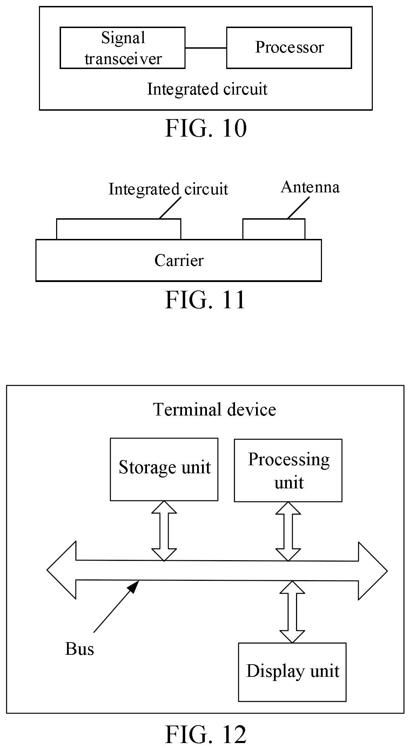

An embodiment of the present disclosure further provides an integrated circuit, as shown in FIG. 10, including a signal transceiver and a processor, wherein the signal transceiver is configured to transmit a detection signal and to receive an echo signal of the detection signal reflected by a target; and the processor is configured to implement the signal processing method described in any of the preceding embodiments to process the echo signal to achieve target detection.

Exemplarily, the processor may be, for example, a baseband (BB) unit and/or an MCU unit.

Exemplarily, the integrated circuit may be a millimeter wave radar chip or a sensor chip.

In an exemplary embodiment, the integrated circuit may include a radio frequency module, an analog signal processing module and a digital signal processing module that are connected in sequence, wherein the radio frequency module is configured to generate a radio frequency transmitting signal and to receive an echo signal, the analog signal processing module is configured to perform down-conversion processing on the echo signal to obtain an intermediate frequency signal, and the digital processing module is configured to perform analog-to-digital conversion on the intermediate frequency signal to obtain a digital signal, and to process the digital signal based on the signal processing method in the embodiment of the present disclosure to achieve target detection.

In some alternative embodiments, the integrated circuit may be in an Antenna-In-Package (AiP) chip structure, an Antenna-On-Package (AoP) chip structure, or an Antenna-On-Chip (AoC) chip structure.

According to some other embodiments of the present disclosure, an electromagnetic wave sensor is further provided. The electromagnetic wave sensor may include an antenna, as well as the integrated circuit as previously described. The integrated circuit is electrically connected with the antenna, and is configured to transmit and receive the electromagnetic wave signal. For example, as shown in FIG. 11, the electromagnetic wave sensor may include: a carrier body; an integrated circuit and an antenna as described in any of the above embodiments, and the integrated circuit may be provided on the carrier body; the antenna may be provided on the carrier body, or the antenna is integrated with the integrated circuit as an integral device provided on the carrier body (i.e., in this situation, the antenna may be an antenna disposed in the AiP, AoP or AoC structure), wherein the integrated circuit is connected with the antenna (i.e., in this situation, the sensor chip or the integrated circuit is not integrated with the antenna, such as the conventional SoC, etc.), and is configured to transmit and receive an electromagnetic wave signal. The carrier body may be a printed circuit board PCB, and the corresponding transmission line may be a PCB trace.

An embodiment of the present disclosure further provides a computer-readable storage medium, including a computer program or instructions, and when the computer program or instructions are executed, the method described in any of the above embodiments is implemented.

The present application further provides a terminal, which includes the radar or integrated circuit or electromagnetic wave sensor as described above. The terminal may be, but is not limited to, various personal computers, laptop computers, smart phones, tablet computers, vehicles, drones, portable wearable devices, smart home devices or smart robots, etc.

The present disclosure further provides a terminal device, which may be in a form of a general-purpose computing device. As shown in FIG. 12, components of the terminal device may include but are not limited to: at least one processing unit, at least one storage unit, a bus connecting different system components (including a storage unit and a processing unit), a display unit, etc. Here, the storage unit stores program code that can be executed by the processing unit, so that the processing unit implements the method according to various exemplary embodiments of the present disclosure described in the specification. The storage unit may include a readable medium in a form of a volatile storage unit, such as a Random Access Memory (RAM) and/or a cache storage unit, and may further include a Read-Only Memory (ROM).

The storage unit may further include a program/utility having a set (at least one) of program modules including, but not limited to, an operating system, one or more application programs, other program modules, and program data, which may include implementations of a network environment in each or a combination of these examples.

The bus may represent one or more of several types of bus structures, including a storage unit bus or storage unit controller, a peripheral bus, a graphics acceleration port, a processing unit, or a local bus using any of a variety of bus structures.

The terminal device may further communicate with one or more external devices (e.g., keyboards, pointing devices, Bluetooth devices, etc.), and may also communicate with one or more devices that enable a user to interact with the electronic device, and/or with any device (e.g., a router, modem, etc.) that enables the electronic device to communicate with one or more other computing devices. Such communication may be performed through an Input/Output (I/O) interface. Moreover, the terminal device may also communicate with one or more networks, such as a Local Area Network (LAN), a Wide Area Network (WAN), and/or a public network (e.g. the Internet) through a network adapter. The network adapter may communicate with other modules of the electronic device through the bus. It should be understood that, although not shown in the figures, other hardware and/or software modules may be used in conjunction with the terminal device, including, but not limited to, microcode, device driver, redundant processing unit, external disk drive array, RAID system, tape drive, and data backup storage system.

For example, the terminal device in the embodiment of the present disclosure may further include: a device body; and an electromagnetic wave sensor as described in any of the above embodiments disposed on the device body; herein the electromagnetic wave sensor may be used to achieve functions such as target detection and/or wireless communication.

On the basis of the above embodiments, in an alternative embodiment of the present disclosure, the electromagnetic wave sensor may be disposed outside the device body or inside the device body, while in some other alternative embodiments of the present disclosure, the electromagnetic wave sensor may be partially disposed inside the device body and partially disposed outside the device body. The embodiments of the present disclosure are not limited to this, it is up to the actual situation.

In an alternative embodiment, the above device body may be a component and product applied to a field such as smart cities, smart houses, transportation, smart homes, consumer electronics, security monitoring, industrial automation, in-cabin detection (such as smart cockpits), medical devices, or health care. For example, the device body may be a smart transportation device (such as an automobile, bicycles, motorcycle, ship, subway, train, etc.), security device (such as a camera), liquid level/flow rate detection device, smart wearable device (such as a bracelet, glasses, etc.), smart home device (such as a sweeping robot, door lock, television, air conditioner, smart light, etc.), various communication devices (such as a mobile phone, tablet computer, etc.), as well as a road gate, smart traffic light, smart sign, traffic camera and various industrial mechanical arms (or robots), etc. The device body may be various instruments for detecting vital signs parameters and various devices equipped with the instruments, such as a vital signs characteristics detection device in an automobile cabin, indoor personnel monitoring device, intelligent medical device, consumer electronic device, etc.

A person of ordinary skill in the art may understand that all or some of acts in the methods disclosed above, systems, functional modules or units in apparatuses may be implemented as software, firmware, hardware, and an appropriate combination thereof. In a hardware implementation, division of the function modules/units mentioned in the above description does not always correspond to division of physical components. For example, a physical component may have multiple functions, or a function or an act may be executed by several physical components in cooperation. Some components or all components may be implemented as software executed by a processor such as a digital signal processor or a microprocessor, or implemented as hardware, or implemented as an integrated circuit such as an application-specific integrated circuit (ASIC). Such software may be distributed on a computer-readable medium, and the computer-readable medium may include a computer storage medium (or a non-transitory medium) and a communication medium (or a transitory medium). As known to a person of ordinary skill in the art, the term "computer storage medium" includes volatile or nonvolatile, and removable or irremovable media implemented in any method or technology for storing information (for example, a computer-readable instruction, a data structure, a program module, or other data). The computer storage medium includes, but is not limited to, a Random Access Memory (RAM), a Read-Only Memory (ROM), an Electrically Erasable Programmable ROM (EEPROM), a flash memory or other memory technologies, a Compact Disc Read-Only Memory (CD-ROM), a Digital Video Disk (DVD) or other optical discs, a cassette, a magnetic tape, a disk memory or other magnetic storage apparatuses, or any other medium capable of storing desired information and accessible by a computer. In addition, it is known to a person of ordinary skill in the art that the communication medium usually includes a computer-readable instruction, a data structure, a program module, or other data in a modulated data signal such as a carrier wave or another transport mechanism, and may include any information delivery medium.

In addition, the terms "first" and "second" or the like used in the present application are just for descriptive purposes and cannot be understood as indicating or implying relative importance or implicitly indicating the quantity of technical features indicated. Thus, the feature defined with "first", "second" or the like may explicitly or implicitly include at least one feature.

In the description of the present application, "a plurality" means at least two, for example, two, three, etc. unless otherwise explicitly defined.

In the description of this specification, the description referring to the terms "one embodiment," "some embodiments," "an example," "a specific example," or "some examples" or the like means that a specific feature, structure, material, or characteristic described in connection with the embodiment or example is included in at least one embodiment or example of the present application. In this specification, schematic expressions of the above terms do not necessarily refer to the same embodiment or example. Furthermore, the specific feature, structure, material or characteristic described may be combined in any one or more embodiments or examples in a suitable manner. In addition, those skilled in the art can combine different embodiments or examples and features of different embodiments or examples described in this specification without any conflict between each other.

Although the embodiments of the present application have been shown and described above, it may be understood that the above embodiments are illustrative and should not be construed as limiting the present application. A person of ordinary skill in the art can make changes, modifications, substitutions and variations to the above embodiments within the scope of the present application.

## Claims

1. A signal processing method, comprising:
estimating position information and amplitude of each target under a current target number based on an initial target number in a direction of arrival of an echo signal; calculating current energy residual based on position information and amplitude of targets; and if the energy residual is greater than a preset threshold, increasing the current target number and re-estimating position information and amplitude of each target under the current target number until current energy residual is less than the preset threshold, wherein when position information and amplitude of a target are estimated, the position information and amplitude of the target are obtained by performing Fast Fourier Transform, FFT, processing and Chirp Z transform processing on a signal of the target.

2. The method according to claim 1, wherein the position information comprises an angle or a range frequency or a Doppler frequency.

3. The method according to claim 1, wherein before estimating the position information of each target under the current target number, the method further comprises: padding zeros to data-free positions to obtain an echo signal in a uniform linear array.

4. The method according to claim 1, wherein increasing the current target number and re-estimating the position information and amplitude of each target under the current target number comprises:
increasing the current target number by 1, calculating a residual signal in the echo signal as a signal of a newly added target by using the position information and amplitude of each target estimated last time, and obtaining position information and amplitude of the newly added target by performing FFT processing and Chirp Z transform processing on the signal of the newly added target.

5. The method according to claim 4, wherein after obtaining the position information and amplitude of the newly added target by performing the FFT processing and Chirp Z transform processing on the residual signal, the method further comprises: repeatedly performing the following act until the position information of the target converges: for each target, on a premise that position information and amplitudes of other targets are fixed, calculating the residual signal in the echo signal as a signal of a current target based on the position information and amplitudes of the other targets, and performing FFT processing and Chirp Z transform processing on the signal of the current target to obtain new position information and amplitude of the current target.

6. The method according to claim 1, wherein when a preset target number is 1, obtaining the position information and amplitude of the target by performing FFT processing and Chirp Z transform processing on the signal of the target comprises:
performing FFT processing on the signal of the target to obtain a first frequency corresponding to a largest energy in a spectrum;
setting a first frequency range according to the first frequency, performing Chirp Z transform processing on the signal of the target according to the first frequency range, and obtaining a second frequency corresponding to a largest energy in a spectrum and a corresponding amplitude, wherein the amplitude is used as an amplitude of a current target; and
obtaining the position information of the signal of the target based on the second frequency and the amplitude.

7. The method according to claim 6, wherein setting the first frequency range based on the first frequency comprises: setting the first frequency range to be the first frequency ± 1/L, where L is a number of discrete data points processed by the FFT.

8. The method according to claim 1, wherein after increasing the current target number, the method further comprises: terminating a current signal processing procedure if the current target number reaches a preset maximum target number.

9. A signal processing apparatus, comprising a processor and a memory storing a computer program executable on the processor, wherein the program, when executed by the processor, implements acts of the method according to any one of claims 1 to 8.

10. A radar, comprising a transceiver and a processor, wherein the transceiver comprises at least one antenna, the transceiver is configured to transmit a detection signal and to receive an echo signal after the detection signal is reflected by a target; and the processor is configured to implement the method according to any one of claims 1 to 8.

11. An integrated circuit, comprising a signal transceiver and a processor, wherein the signal transceiver is configured to transmit a detection signal and to receive an echo signal after the detection signal is reflected by a target; and the processor is configured to implement the method according to any one of claims 1 to 8 to process the echo signal and achieve target detection.

12. The integrated circuit according to claim 11, wherein the integrated circuit is a millimeter wave chip or a sensor chip.

13. An electromagnetic wave sensor comprising:
a carrier body;
the integrated circuit according to claim 11 or 12, provided on the carrier body; and
an antenna, provided on the carrier body, or integrated with the integrated circuit as an integral device provided on the carrier body;
wherein the integrated circuit is connected with the antenna to transmit an electromagnetic wave signal and/or receive an echo signal.

14. A terminal, comprising the radar according to claim 10, or the integrated circuit according to claim 11 or 12, or the electromagnetic wave sensor according to claim 13.

15. A readable storage medium, having computer-executable instructions stored therein, wherein the computer-executable instructions are configured to implement the method according to any one of claims 1 to 8.
